# EUROPEAN PATENT SPECIFICATION

(11) **EP 4 274 051 B1**
(45) Date of publication and mention of the grant of the patent: **02.07.2025**
(21) Application number: 21914339.3
(22) Date of filing: 28.12.2021
(51) Int. Cl.: H02J 7/00

(54) **ANTI-BACKFLOW CHARGING CIRCUIT AND ELECTRONIC DEVICE**
ANTIRÜCKFLUSSLADESCHALTUNG UND ELEKTRONISCHE VORRICHTUNG
CIRCUIT DE CHARGE ANTI-REFLUX ET DISPOSITIF ÉLECTRONIQUE

(30) Priority: 30.12.2020 CN 202011629522
(43) Date of publication of application: 08.11.2023
(73) Proprietor: Vivo Mobile Communication Co., Ltd., Dongguan, Guangdong 523863 (CN)
(72) Inventor: CHEN, Guanghui, Dongguan, Guangdong 523863 (CN)
(74) Representative: Murgitroyd & Company
(86) International application number: PCT/CN2021/141881
(87) International publication number: WO 2022/143603

(56) References cited:
- CN-A- 104 782 019
- CN-A- 104 795 864
- CN-A- 111 490 570
- CN-A- 112 787 375
- US-A1- 2011 133 700
- US-A1- 2014 312 691
- US-A1- 2015 280 473

## Description

### TECHNICAL FIELD

This document relates to the field of charging technologies, and in particular to an anti-backflow charging circuit and an electronic device.

### BACKGROUND

At present, a mobile terminal mainly manages a charging process between an adapter and a battery through a charging circuit. The charging process is mainly divided into pre-charging, a constant current, a constant voltage, and the like.

In existing solutions for charging batteries of the mobile terminals, due to limitation of a control mode, current backflow may probably occur at the moment when a charger is unplugged, which leads to display of a charging state after the charger is unplugged, thereby misleading a user.

US 2011/133700 A1 and US 2015/280473 A1 represent technical prior art.

### SUMMARY

This specification provides an anti-backflow charging circuit and an electronic device, to quickly and accurately recognize a phenomenon of current backflow of a battery, and effectively prevent a problem of battery output current backflow in existing charging solutions.

To achieve the foregoing objectives, the following technical solutions are used in the embodiments of the present invention.

According to a first aspect, an embodiment of this application provides an anti-backflow charging circuit, including a charging circuit, an input current detection circuit, an output current detection circuit, and a control module.

An input of the charging circuit is connected to a power adapter, and an output of the charging circuit is connected to a battery.

The input current detection circuit is connected between the power adapter and the charging circuit, to detect an input current. The output current detection circuit is connected between the charging circuit and the battery, to detect a battery output current.

The control module is separately connected to the charging circuit, the input current detection circuit, and the output current detection circuit, and is configured to control, if it is detected that the input current is less than a first current threshold and the battery output current is greater than a second current threshold, a path between the input and the output of the charging circuit to be disconnected.

According to a second aspect, an embodiment of this application provides an electronic device. The electronic device includes the anti-backflow charging circuit according to the first aspect.

In the embodiments of this application, the anti-backflow charging circuit is connected to the battery and the power adapter to form a charging loop. The anti-backflow charging circuit includes the charging circuit, the input current detection circuit, the output current detection circuit, and the control module. The input of the charging circuit is connected to the power adapter, and the output of the charging circuit is connected to the battery. The input current detection circuit is connected between the power adapter and the charging circuit, to detect the input current. The output current detection circuit is connected between the charging circuit and the battery, to detect the battery output current. The control module is separately connected to the charging circuit, the input current detection circuit, and the output current detection circuit, and is configured to control, if it is detected that the input current is less than the first current threshold and the battery output current is greater than the second current threshold, the path between the input and the output of the charging circuit to be disconnected. In the technical solutions provided in the present invention, by determining a value of the input current and a value of the battery output current, it is determined whether current backflow occurs in the charging circuit. When the input current is less than the first current threshold and the battery output current is greater than the second current threshold, that is, a current backflow state is likely to occur, the path between the input and the output of the charging circuit is controlled in time to be disconnected, to enable the charging battery to enter the charging suspension state, thereby effectively preventing occurrence of a current backflow state.

### BRIEF DESCRIPTION OF DRAWINGS

To describe the technical solutions in one or more embodiments of this specification or in the prior art more clearly, the following briefly describes the accompanying drawings required for describing the embodiments or the prior art. Apparently, the accompanying drawings in the following description show merely some embodiments recorded in this specification, and a person of ordinary skill in the art may still derive other drawings from these accompanying drawings without creative efforts.
FIG. 1 is a specific schematic structural diagram of a switch-type charging circuit without an anti-backflow mechanism according to an embodiment of this application;
FIG. 2 is a first schematic structural diagram of an anti-backflow charging circuit according to an embodiment of this application;
FIG. 3 is a second schematic structural diagram of an anti-backflow charging circuit according to an embodiment of this application;
FIG. 4 is a third schematic structural diagram of an anti-backflow charging circuit according to an embodiment of this application;
FIG. 5 is a fourth schematic structural diagram of an anti-backflow charging circuit according to an embodiment of this application;
FIG. 6 is a fifth schematic structural diagram of an anti-backflow charging circuit according to an embodiment of this application; and
FIG. 7 is a sixth schematic structural diagram of an anti-backflow charging circuit according to an embodiment of this application.

### DESCRIPTION OF EMBODIMENTS

To make a person skilled in the art understand the technical solutions in embodiments of this application better, the following clearly and completely describes the technical solutions in the embodiments of this application with reference to the accompanying drawings in the embodiments of this application. Apparently, the described embodiments are merely some of this specification, rather than all embodiments. All other embodiments obtained by a person of ordinary skill in the art based on one or more embodiments of this specification without creative efforts shall fall within the protection scope of this document.

Terms "first" and "second" in the specification and claims of this application are used to distinguish between similar objects, and do not need to be used to describe a specific order or sequence. It should be understood that, data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

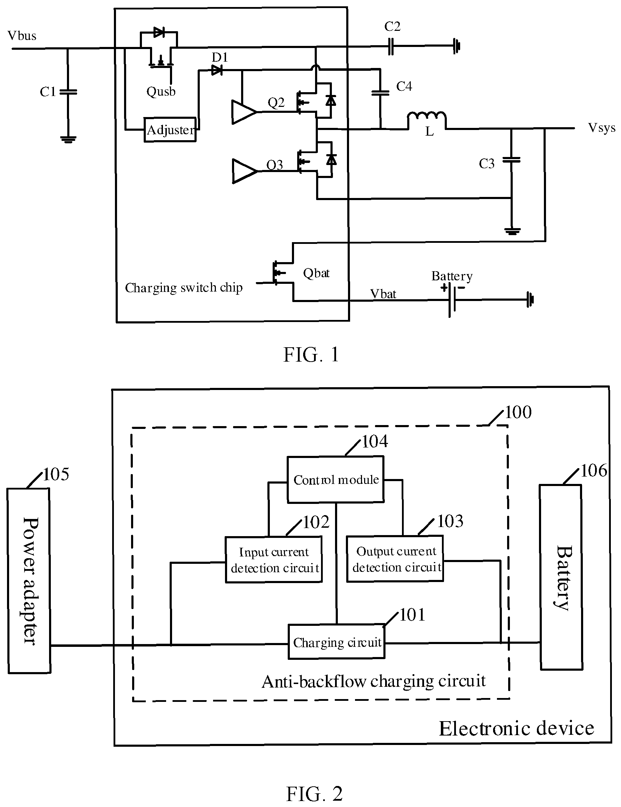

As shown in FIG. 1, a specific structural diagram of a switch-type charging circuit without an anti-backflow mechanism is provided. Four field-effect transistors (Metal-Oxide-Semiconductor Field-EffectTransistor, MOSFET), that is, Qusb, Q2, Q3, and Qbat are used in the charging circuit. The Q2, the Q3, and an inductor L form a BUCK conversion circuit (BUCK circuit) to control a voltage and current of a battery. The Qusb is configured to input current sampling and block reverse leakage of a battery voltage. The Qbat is conducted during charging and cut off after charging. C2 and C3 are an input capacitor and an output capacitor, respectively. C4 and D1 form a bootstrap circuit to control conduction and cut-off of the Q2 (that is, in a cut-off state) after boosting.

In a constant voltage charging stage, when the battery is almost fully charged, a battery voltage gradually approaches a charging cut-off voltage, an input current becomes increasingly smaller, a duty ratio of the Q2 becomes increasingly smaller, and a duty ratio of a low-side transistor Q3 becomes increasingly larger. After the duty ratio of the low-side transistor Q3 reaches a specified value, to prevent energy of the inductor L from reversely leaking to an input, the Q3 will be cut off and enter a diode mode, and follow current is implemented through a body diode of the Q3. However, to maintain conduction and cut-off of an up-side transistor Q2, the Q3 is still to be opened at an interval of a time to charge the C4. When the Q3 is opened, if energy of the inductor L is higher than input energy, the reverse current will flow back to the input, thereby forming an abnormal reverse boost mode. Even if an end user disconnects the charger, a voltage at the input will be maintained, leading to that a system mistakenly thinks that the charger is still not disconnected and is still displayed to be in charging, affecting user experience.

Buck usually detects an inductor current through a low-side MOSFET (also called "a low-side transistor", that is, the Q3 in the foregoing figure). When the Buck is in a light load mode, a duty ratio becomes smaller, an on time of the Q3 becomes longer, a backward current may easily occur in the inductor current to generate backflow. In this case, if zero-crossing detection of the low-side transistor Q3 is not accurate, backflow will also occur.

To deal with the current backflow caused by a working principle of the foregoing charging circuit, an embodiment of this application provides an anti-backflow charging circuit, an anti-backflow algorithm and logic are added through voltage and current detection circuits connected to a charging circuit and battery, to determine whether a charging system is in an abnormal reverse boost state. If it is detected that a user has disconnected the charger and the system is in the abnormal reverse boost state, charging will be terminated in time and the abnormality will be reported to the system, thus effectively preventing occurrence of backflow.

With reference to the accompanying drawings, the technical solutions of this application are described in detail by using specific embodiments and application scenarios.

FIG. 2 is a first structural schematic diagram of an anti-backflow charging circuit according to an embodiment of this application. The anti-backflow charging circuit may be disposed in an electronic device for charging a battery in the electronic device. As shown in FIG. 2, the anti-backflow charging circuit 100 includes a charging circuit 101, an input current detection circuit 102, an output current detection circuit 103, and a control module 104.

An input of the charging circuit is connected to a power adapter 105, and an output of the charging circuit is connected to a battery 106.

The input current detection circuit 102 is connected between the power adapter 105 and the charging circuit 101, to detect an input current. The output current detection circuit 103 is connected between the charging circuit 101 and the battery 106, to detect a battery output current.

The control module 104 is separately connected to the charging circuit 101, the input current detection circuit 102, and the output current detection circuit 103, and is configured to control, if it is detected that the input current is less than a first current threshold and the battery output current is greater than a second current threshold, a path between the input and the output of the charging circuit 101 to be disconnected.

The control module 104 may be integrated in a central processing unit (Central Processing Unit, CPU) of the electronic device. The charging circuit 101 is a core circuit that draws electric energy from the power adapter 105 to charge the battery 106. In this embodiment of this application, a structure and charging principle of the charging circuit 101 are not limited, but in the circuit structure, but a possibility of output of reverse backflow needs to be satisfied.

In a specific embodiment, the charging circuit 101 may be specifically any one of a switch-type charging circuit (such as the circuit structure shown in FIG. 1), a charge pump charging circuit, and a three-stage buck converter charging circuit.

Taking the charging circuit shown in FIG. 1 as an example, based on this, the switch-type charging circuit with the anti-backflow mechanism provided in an embodiment of this application, that is, the anti-backflow charging circuit, is shown in FIG. 2. The circuit structure includes not only the switch-type charging circuit, but also includes the input current detection circuit 102 including an operational amplifier A1 and the output current detection circuit 103 including an operational amplifier A2. The control module 104 is separately connected to an output of the operational amplifier A1 and an output of the operational amplifier A2, and a gate of the Q2 and a gate of the Q3 of the switch-type charging circuit.

During charging, the operational amplifier A1 and the operational amplifier A2 respectively transmit a correspondingly collected input current Ibus and battery output current Ibat to the control module 104. To distinguish a flow direction of the battery output current Ibat easily, it is defined that if there is a current flowing into a battery, that is, the battery is in a charging state, the Ibat is marked as a backward current; conversely, if there is a current flowing out of the battery, that is, the battery is in a discharging state, the Ibat is marked as a forward current. Usually, when there is abnormal backflow, because a charger (the charging circuit) has been disconnected, power supply for power consumption of the system will be provided by the battery, and lbat>0. In addition, because boost is a relatively weak balance, and there is no load at the input of the charging circuit, the current Ibus is in a state approximate to 0. Based on this phenomenon, a logic for determining whether the system is in an abnormal backflow state provided in this embodiment is as follows.

After receiving the input current Ibus and the battery output current Ibat respectively transmitted by the operational amplifier Al and the operational amplifier A2, the control module 104 determines whether the input current Ibus is less than a first current threshold Ibus 1 and whether the battery output current Ibat is greater than a second current threshold Ibatl. To reduce a probability of mis-determining, the first current threshold Ibusl may be set smaller, such as 50mA, and the second current threshold Ibatl may be set to 0 or a value greater than 0. If the Ibus is less than the Ibusl, and the Ibat is greater than the Ibatl, it is preliminarily considered that the charging circuit 101 currently meets a preliminary condition of backflow. In this case, to prevent that a backflow state exists actually, the control module 104 directly controls the charging circuit 101 to enter a charging suspension state. A specific action for suspending the charging state is as follows: a Qusb transistor is controlled to be cut off, that is, switch charging is suspended, or a Q2 and Q3 are controlled to be cut off (for example, gate driving voltages of the Q2 and Q3 are closed), that is, switch charging is stopped, so that there is no current on an inductor L, effectively preventing current backflow at the output.

In this embodiment, by determining a relationship between the input current, the battery output current, and a preset current threshold, it is determined whether current backflow occurs in the charging circuit. When the input current is less than the first current threshold and the battery output current is greater than the second current threshold, that is, the current backflow state is likely to occur, the charging circuit is controlled in time to enter the charging suspension state, thereby effectively preventing occurrence of the current backflow state.

If it is detected that the input current is less than the first current threshold and the battery output current is greater than the second current threshold, if the system is in a normal charging state, that is, the charger is not disconnected, even if charging is stopped, there is still a voltage Vbus at the input (because, for example, the battery is fully charged but the charger is not unplugged). If the system is in a backflow state, after the path between the input and the output of the charging circuits disconnected (for example, the Qusb is controlled to be cut off, or the Q2 and Q3 is controlled to be cut off), the input voltage cannot be maintained and will drop to 0V. Based on this, it can be determined whether the system is really in the backflow state by further detecting a value at the input, that is, on the basis of determining the relationship between the input current, the battery output current, and preset current thresholds respectively corresponding to the input current and the battery output current, a mechanism for determining the voltage at the input is added, to distinguish whether the battery is fully charged or current backflow phenomenon occurs, thereby more accurately recognizing and controlling the current backflow more accurately.

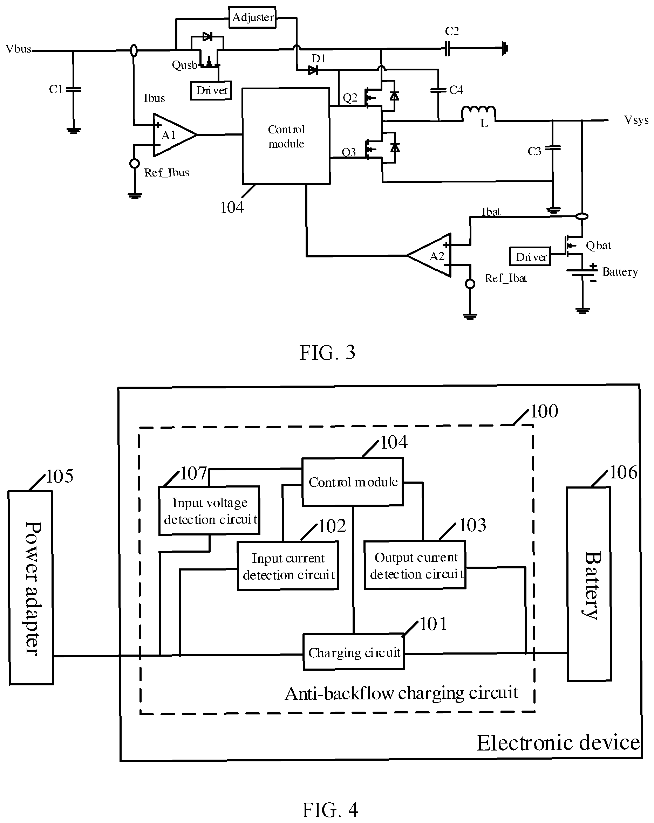

Based on this, further, as shown in FIG. 4, the anti-backflow charging circuit shown in FIG. 2 may further include: an input voltage detection circuit 107 connected between the power adapter 105 and the charging circuit 101, configured to detect an input voltage.

The control module 104 is connected to the input voltage detection circuit 107, and, after the path between the input and output of the charging circuit 101 is disconnected, is further configured to determine that the charging circuit 101 is in an output current backflow state if an input voltage is detected to be less than a voltage threshold, control the charging circuit 101 to exit a charging state, and output an alarm signal that the charging circuit 101 has been disconnected.

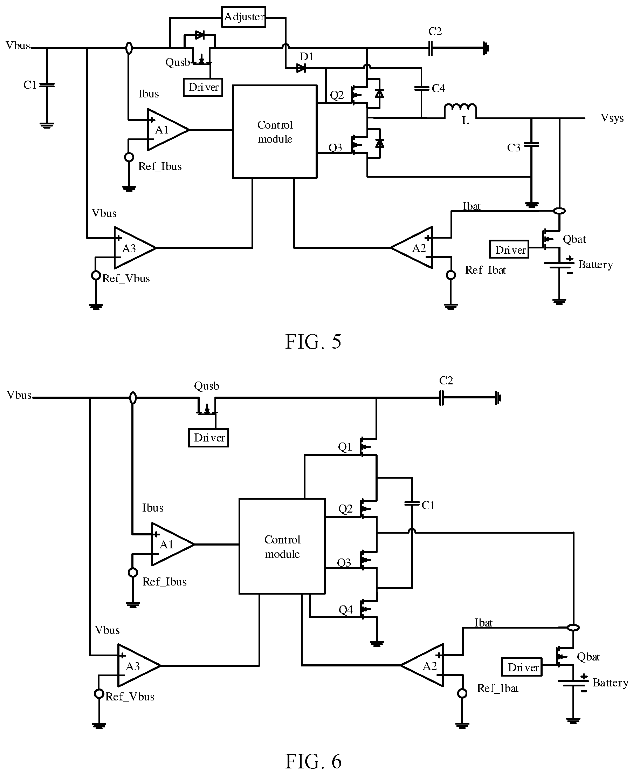

Specifically, continuing the example shown in FIG. 3, as shown in FIG. 5, the anti-backflow charging circuit shown in FIG. 3 further includes an input voltage detection circuit 107 including an operational amplifier A3.

A control module 104 receives an input voltage Vbus transmitted by the operational amplifier A3. When it is determined, based on that an input current Ibus is less than a first current threshold Ibusl and a battery output current Ibat is greater than a second current threshold Ibatl, that a system meets an initial condition for backflow, and controls the charging circuit 101 to suspend a charging function, it can be further determined whether the input voltage Vbus is less than the voltage threshold Vbusl (0V, or a value approximate to 0V). If the input voltage Vbus is less than the voltage threshold value Vbusl, it indicates that the system is in a backflow state. Because the input voltage cannot be maintained only after Qusb is controlled to be cut off or Q2 and Q3 are controlled to be cut off, the input value falls below a voltage threshold Vbusl and approaches 0V.

After it is determined that current backflow occurs, the control module 104 may output an alarm signal that the charging circuit 101 has been disconnected to a terminal system (such as a central control unit CPU of the electronic device), to remind a user of starting a charging function by re-triggering a charger.

Further, the control module 104 is further configured to receive a charging recovery control signal based on a feedback of the alarm signal that the charging circuit 101 has been disconnected after the alarm signal is output, and control the charging circuit 101 to re-enter the charging state.

For example, after receiving, through the terminal system, the alarm signal that the charging circuit 101 has been disconnected, the user may unplug the charger and plug the charger again, to trigger the charging circuit 101 to restart the charging function. Alternatively, "Recover charging" on an alarm signal interface popped up by the terminal system is tapped, to trigger the charging circuit 101 to restart the charging function. After receiving a charging recovery control signal fed back by the terminal system, the control module 104 opens a Qusb (that is, controls the Qusb to enter a conduction state) and open a Q2 and Q3 simultaneously (that is, controls the Q2 and Q3 to work alternately), implementing switch charging and start.

Further, after a path between an input and an output of the charging circuit 101 is disconnected, the control module 104 is further configured to determine that the charging circuit 101 is not in an output current backflow state if it is detected that an input voltage is not less than a voltage threshold and control the charging circuit 101 to re-enter a charging state.

Specifically, in the anti-backflow charging circuit shown in FIG. 3, when it is determined, based on that the input current Ibus is less than the first current threshold Ibusl and the battery output current Ibat is greater than the second current threshold Ibatl, that a system meets an initial condition for backflow, and controls the charging circuit 101 to suspend a charging function, it can be further determined whether the input voltage Vbus is less than the voltage threshold Vbusl (0V, or a value approximate to 0V). If the input voltage Vbus is not less than the voltage threshold Vbusl, it indicates that the system is still in a normal charging state and there is no current backflow. In this case, the charging circuit 101 can be directly controlled to re-enter the charging state from the charging suspension state and continue to charge a battery 106.

A specific structure of the charging circuit 101 in the anti-backflow charging circuit may be that the charging circuit 101 includes an input field effect transistor and a switch field effect transistor group.

Correspondingly, if it is detected that the input current is less than the first current threshold and the output current is greater than the second current threshold, the control module 104 is configured to control the input field effect transistor in the charging circuit 101 to be cut off or control the switch field effect transistor group in the charging circuit 101 to be cut off, to control the path between the input and the output of the charging circuit 101 to be disconnected. Specifically, to control anti-backflow more timely, the input field effect transistor may be cut off first, and a working state of the switch field effect transistor group is kept unchanged, and the path between the input and the output of the charging circuit 101 is quickly cut off. Subsequently, if it is determined that the input voltage is less than the voltage threshold, the switch field effect transistor group is controlled to be cut off, and if it is determined that the input voltage is not less than the voltage threshold, the input field effect transistor is controlled to be conducted, so that a charging state of the charging circuit 101 can be quickly recovered.

Further, if it is detected that the input current is less than the first current threshold and the output current is greater than the second current threshold, the input field effect transistor in the charging circuit 101 is controlled to be cut off.

Correspondingly, after the path between the input and the output of the charging circuit 101 is cut off, the control module 104 is further configured to: control, if it is detected that the input voltage is less than the voltage threshold, the switch field effect transistor group to be cut off, to control the charging circuit 101 to exit the charging state; and control, if it is detected that the input voltage is not less than the voltage threshold, the input field effect transistor to be conducted, to control the charging circuit 101 to enter the charging state.

Correspondingly, if it is detected that the input current is less than the first current threshold and the output current is greater than the second current threshold, in a case that the switch field effect transistor group in the charging circuit 101 is controlled to be cut off, if it is detected that the input voltage is not less than the voltage threshold, the control module 104 is further configured to control the switch field effect transistor group to start charging (that is, to control a plurality of field effect transistors in the switch field effect transistor group to be conducted and cut off alternately), to control the charging circuit 101 to enter the charging state.

In specific implementation, in a case that the charging circuit 101 is a switch-type charging circuit, the switch field effect transistor group includes a first field effect transistor (that is, the field effect transistor Q2 in FIG. 3) and a second field effect transistor (that is, the field effect transistor Q3 in FIG. 3) connected to the control module.

A gate of the first field effect transistor and a gate of the second field effect transistor are both connected to the control module, a source of the first field effect transistor is connected to a drain of the second field effect transistor, a drain of the first field effect transistor is connected to a source of the input field effect transistor, and a source of the second field effect transistor is grounded.

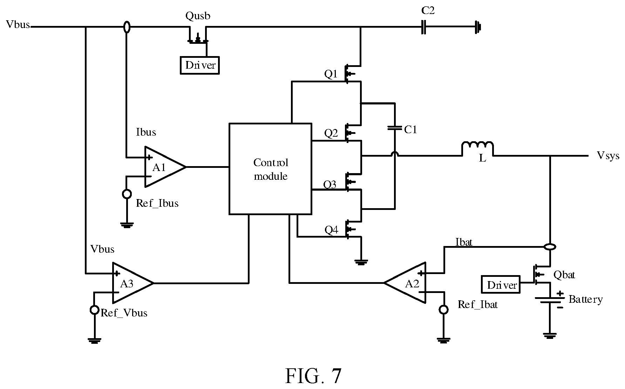

In specific implementation, in a case that the charging circuit 101 is a charge pump charging circuit or a three-stage buck converter charging circuit, the switch field effect transistor group includes a third field effect transistor (the field effect transistor Q1 in FIG. 6 or FIG. 7), a fourth field effect transistor (the field effect transistor Q2 in FIG. 6 or FIG. 7), a fifth field effect transistor (the field effect transistor Q3 in FIG. 6 or FIG. 7), and a sixth field effect transistor (the field effect transistor Q4 in FIG. 6 or FIG. 7) that are connected to the control module.

A gate of the third field effect transistor, a gate of the fourth field effect transistor, a gate of the fifth field effect transistor, and a gate of the sixth field effect transistor are all connected to the control module. A source of the third field effect transistor is connected to a drain of the fourth field effect transistor, a source of the fourth field effect transistor is connected to a drain of the fifth field effect transistor, a source of the fifth field effect transistor is connected to a drain of the sixth field effect transistor, a drain of the third field effect transistor is connected to a source of the input field effect transistor, and a source of the sixth field effect transistor is grounded.

Specifically, in a case that the charging circuit 101 is a buck switch charging circuit, in FIG. 5, an input current Ibus is detected by an operational amplifier A1, a battery output current Ibat is detected by an operational amplifier A2, and an input voltage Vbus is detected by an operational amplifier A3. The charging circuit 101 includes an input field effect transistor (Qusb) and a switch field effect transistor group (Q2 and Q3).

The foregoing manner for controlling disconnection of the path between the input and output of the charging circuit 101 is as follows: the input field effect transistor in the charging circuit is controlled to be cut off (that is, the Qusb is cut off), or the switch field effect transistor group in the charging circuit is controlled to be cut off (that is, the Q2 and Q3 are cut off).

When the input current is less than the first current threshold and the output current is greater than the second current threshold, the input field effect transistor is controlled to be cut off (that is, the Qusb is cut off). If the input voltage is less than a voltage threshold, the switch field effect transistor group is to be controlled to be cut off (that is, the Q2 and Q3 are cut off), to stop a charging state fundamentally.

The foregoing manner for controlling the charging circuit 101 to enter the charging state is as follows: the input field effect transistor (that is, the Qusb) is controlled to be conducted, and the switch field effect transistor group is controlled to start charging (that is, the Q2 and Q3 are alternately conducted and cut off).

In addition, this embodiment further provides an anti-backflow charging circuit (shown in FIG. 6 or FIG. 7) including the charging circuit 101 in this embodiment of this application which is respectively used as a charge pump charging circuit or a three-stage buck converter charging circuit. Specifically, in a case that the charging circuit 101 is used as the charge pump charging circuit, in FIG. 6, an input current Ibus is detected by an operational amplifier A1, a battery output current Ibat is detected by an operational amplifier A2, and an input voltage Vbus is detected by an operational amplifier A3. The charging circuit 101 includes an input field effect transistor (Qusb) and a switch field effect transistor group (Ql, Q2, Q3, and Q4).

The foregoing manner for controlling the disconnection of the path between the input and output of the charging circuit 101 is as follows: the input field effect transistor in the charging circuit is controlled to be cut off (that is, the Qusb is cut off) or the switch field effect transistor group in the charging circuit is controlled to be cut off (that is, the Ql, Q2, Q3, and Q4 are cut off).

When an input current is less than ta first current threshold and an output current is greater than a second current threshold, the input field effect transistor is controlled to be cut off (that is, the Qusb is cut off). If an input voltage is less than a voltage threshold, the switch field effect transistor group is to be controlled to be cut off (that is, the Ql, Q2, Q3, and Q4 are cut off), thereby stopping a charging state fundamentally.

The foregoing manner for controlling the charging circuit 101 to enter the charging state is as follows: the input field effect transistor (that is, the Qusb) is controlled to be conducted, and the switch field effect transistor group is controlled to start charging (that is, the Q1, Q2, Q3, and Q4 are alternately conducted and cut off).

Specifically, in a case that the charging circuit 101 is used as a three-stage buck converter charging circuit, in FIG. 7, an input current Ibus is detected by an operational amplifier A1, a battery output current Ibat is detected by an operational amplifier A2, and an input voltage Vbus is detected by an operational amplifier A3. The charging circuit 101 includes an input field effect transistor (that is, the Qusb) and the switch field effect transistor group (that is, the Ql, Q2, Q3, and Q4).

The foregoing manner for controlling the disconnection of the path between the input and output of the charging circuit 101 is as follows: the input field effect transistor in the charging circuit is controlled to be cut off (that is, the Qusb is cut off) or the switch field effect transistor group in the charging circuit is controlled to be cut off (that is, the Ql, Q2, Q3, and Q4 are cut off).

When an input current is less than ta first current threshold and an output current is greater than a second current threshold, the input field effect transistor is controlled to be cut off (that is, the Qusb is cut off). If an input voltage is less than a voltage threshold, the switch field effect transistor group is to be controlled to be cut off (that is, the Ql, Q2, Q3, and Q4 are cut off), thereby stopping a charging state fundamentally.

The foregoing manner for controlling the charging circuit 101 to enter the charging state is as follows: the input field effect transistor (that is, the Qusb) is controlled to be conducted, and the switch field effect transistor group is controlled to start charging (that is, the Q1, Q2, Q3, and Q4 are alternately conducted and cut off).

Except the charge pump charging circuit and the three-stage buck converter charging circuit, other circuit structures and working principles are the same as corresponding circuit structures in FIG. 4. Details are not described herein again.

For the anti-backflow charging circuit provided in the embodiments of this application, the anti-backflow charging circuit is connected to the battery and the power adapter to form a charging loop. The anti-backflow charging circuit includes the charging circuit, the input current detection circuit, the output current detection circuit, and the control module. The input of the charging circuit is connected to the power adapter, and the output of the charging circuit is connected to the battery. The input current detection circuit is connected between the power adapter and the charging circuit, to detect an input current. The output current detection circuit is connected between the charging circuit and the battery, to detect a battery output current. The control module is separately connected to the charging circuit, the input current detection circuit, and the output current detection circuit, and is configured to control, if it is detected that the input current is less than the first current threshold and the battery output current is greater than the second current threshold, the path between the input and the output of the charging circuit to be disconnected. In the technical solutions provided in the present invention, by determining the value of the input current and the value of the battery output current, it is determined whether current backflow occurs in the charging circuit, and when the input current is less than the first current threshold and the battery output current is greater than the second current threshold, that is, the current backflow state is likely to occur, the charging circuit is controlled in time to enter the charging suspension state, thereby effectively preventing occurrence of the current backflow state.

Further, after the charging state is suspended, the value of the input voltage is further determined, to finally determine whether backflow occurs, so that a determining result is more accurate.

Further, based on the anti-backflow charging circuit structure shown in any one of FIG. 2 to FIG. 7, an embodiment of this application further provides an electronic device, and the electronic device includes the foregoing anti-backflow charging circuit in any one of the foregoing embodiments.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. An anti-backflow charging circuit (100), comprising a charging circuit (101), an input current detection circuit (102), an output current detection circuit (103), and a control module (104), wherein
an input of the charging circuit (101) is connected to a power adapter (105), and an output of the charging circuit (101) is connected to a battery (106);
the input current detection circuit (102) is connected between the power adapter (105) and the charging circuit (101), to detect an input current; the output current detection circuit (103) is connected between the charging circuit (101) and the battery (106), to detect a battery output current; and
the control module (104) is separately connected to the charging circuit (101), the input current detection circuit (102), and the output current detection circuit (103), and
**characterized in that**
the control module (104) is configured to control, if it is detected that the input current is less than a first current threshold and the battery output current is greater than a second current threshold, a path between the input and the output of the charging circuit (101) to be disconnected.

2. The anti-backflow charging circuit (100) according to claim 1, wherein the anti-backflow charging circuit (100) further comprises an input voltage detection circuit (107) connected between the power adapter (105) and the charging circuit (101), and the input voltage detection circuit (107) is configured to detect an input voltage; and
the control module (104) is connected to the input voltage detection circuit (107), and, after the path between the input and the output of the charging circuit (101) is controlled to be disconnected, is further configured to output, if it is detected that the input voltage is less than a voltage threshold, an alarm signal that the charging circuit (101) has been disconnected.

3. The anti-backflow charging circuit (100) according to claim 2, wherein the control module (104) is further configured to receive a charging recovery control signal based on a feedback of the alarm signal that the charging circuit (101) has been disconnected after the alarm signal is output, and control the charging circuit (101) to enter a charging state.

4. The anti-backflow charging circuit (100) according to claim 2, wherein, after the path between the input and the output of the charging circuit (101) is controlled to be disconnected, the control module (104) is further configured to control, if it is detected that the input voltage is not less than the voltage threshold, the charging circuit (101) to enter a charging state.

5. The anti-backflow charging circuit (100) according to claim 1, wherein the charging circuit (101) comprises an input field effect transistor and a switch field effect transistor group; and
the control module (104) is configured to control, if it is detected that the input current is less than the first current threshold and the battery output current is greater than the second current threshold, the input field effect transistor to be cut off or the switch field effect transistor group to be cut off, to control the path between the input and the output of the charging circuit (101) to be disconnected.

6. The anti-backflow charging circuit (100) according to claim 5, wherein if it is detected that the input current is less than the first current threshold and the battery output current is greater than the second current threshold, the input field effect transistor is controlled to be cut off; and
after the path between the input and the output of the charging circuit (101) is controlled to be disconnected, the control module (104) is further configured to: control, if it is detected that an input voltage is less than a voltage threshold, the switch field effect transistor group to be cut off, to control the charging circuit (101) to exit a charging state; or control, if it is detected that the input voltage is not less than the voltage threshold, the input field effect transistor to be conducted, to control the charging circuit (101) to enter a charging state.

7. The anti-backflow charging circuit (100) according to claim 5, wherein the charging circuit (101) is any one of a switch-type charging circuit, a charge pump charging circuit, and a three-stage buck converter charging circuit.

8. The anti-backflow charging circuit (100) according to claim 7, wherein the charging circuit (101) is the switch-type charging circuit, and the switch field effect transistor group comprises a first field effect transistor and a second field effect transistor that are connected to the control module (104); wherein
a gate of the first field effect transistor and a gate of the second field effect transistor are both connected to the control module (104), a source of the first field effect transistor is connected to a drain of the second field effect transistor, a drain of the first field effect transistor is connected to a source of the input field effect transistor, and a source of the second field effect transistor is grounded.

9. The anti-backflow charging circuit (100) according to claim 7, wherein the charging circuit (101) is the charge pump charging circuit or the three-stage buck converter charging circuit, and the switch field effect transistor group comprises: a third field effect transistor, a fourth field effect transistor, a fifth field effect transistor, and a sixth field effect transistor that are connected to the control module (104); wherein
a gate of the third field effect transistor, a gate of the fourth field effect transistor, a gate of the fifth field effect transistor, and a gate of the sixth field effect transistor are all connected to the control module (104), a source of the third field effect transistor is connected to a drain of the fourth field effect transistor, a source of the fourth field effect transistor is connected to a drain of the fifth field effect transistor, a source of the fifth field effect transistor is connected to a drain of the sixth field effect transistor, a drain of the third field effect transistor is connected to a source of the input field effect transistor, and a source of the sixth field effect transistor is grounded.

10. An electronic device, comprising the anti-backflow charging circuit (100) according to any one of claims 1 to 9.

## Patentansprüche

1. Eine Anti-Rückstau-Ladeschaltung (100), die eine Ladeschaltung (101), eine Eingangsstromerkennungsschaltung (102), eine Ausgangsstromerkennungsschaltung (103) und ein Steuermodul (104) beinhaltet, wobei
ein Eingang der Ladeschaltung (101) mit einem Netzadapter (105) verbunden ist und ein Ausgang der Ladeschaltung (101) mit einer Batterie (106) verbunden ist;
die Eingangsstromerkennungsschaltung (102) zwischen dem Netzadapter (105) und der Ladeschaltung (101) verbunden ist, um einen Eingangsstrom zu erkennen; die Ausgangsstromerkennungsschaltung (103) zwischen der Ladeschaltung (101) und der Batterie (106) verbunden ist, um einen Batterieausgangsstrom zu erkennen; und
das Steuermodul (104) getrennt mit der Ladeschaltung (101), der Eingangsstromerkennungsschaltung (102) und der Ausgangsstromerkennungsschaltung (103) verbunden ist, und
**dadurch gekennzeichnet, dass**
das Steuermodul (104) für Folgendes konfiguriert ist: wenn erkannt wird, dass der Eingangsstrom kleiner als eine erste Stromschwelle ist und der Batterieausgangsstrom größer als eine zweite Stromschwelle ist, Steuern, dass ein Pfad zwischen dem Eingang und dem Ausgang der Ladeschaltung (101) unterbrochen wird.

2. Anti-Rückstau-Ladeschaltung (100) gemäß Anspruch 1, wobei die Anti-Rückstau-Ladeschaltung (100) ferner eine Eingangsspannungserkennungsschaltung (107) beinhaltet, die zwischen dem Netzadapter (105) und der Ladeschaltung (101) verbunden ist, und die Eingangsspannungserkennungsschaltung (107) dazu konfiguriert ist, eine Eingangsspannung zu erkennen; und
das Steuermodul (104) mit der Eingangsspannungserkennungsschaltung (107) verbunden ist und, nachdem gesteuert wurde, dass der Pfad zwischen dem Eingang und dem Ausgang der Ladeschaltung (101) unterbrochen wird, ferner dazu konfiguriert ist, wenn erkannt wird, dass die Eingangsspannung unter einer Spannungsschwelle liegt, ein Alarmsignal auszugeben, dass die Ladeschaltung (101) unterbrochen worden ist.

3. Anti-Rückstau-Ladeschaltung (100) gemäß Anspruch 2, wobei das Steuermodul (104) ferner dazu konfiguriert ist, ein Ladungswiederherstellungssteuersignal auf Grundlage einer Rückmeldung des Alarmsignals zu empfangen, dass die Ladeschaltung (101) nach der Ausgabe des Alarmsignals getrennt wurde, und die Ladeschaltung (101) zu steuern, um in einen Ladezustand einzutreten.

4. Anti-Rückstau-Ladeschaltung (100) gemäß Anspruch 2, wobei das Steuermodul (104), nachdem gesteuert wurde, dass der Pfad zwischen dem Eingang und dem Ausgang der Ladeschaltung (101) unterbrochen wird, ferner dazu konfiguriert ist, die Ladeschaltung (101) zu steuern, um in einen Ladezustand einzutreten, wenn erkannt wird, dass die Eingangsspannung nicht unter der Spannungsschwelle liegt.

5. Anti-Rückstau-Ladeschaltung (100) gemäß Anspruch 1, wobei die Ladeschaltung (101) einen Eingangsfeldeffekttransistor und eine Schaltfeldeffekttransistorgruppe beinhaltet; und
wenn erkannt wird, dass der Eingangsstrom kleiner als eine erste Stromschwelle ist und der Batterieausgangsstrom größer als eine zweite Stromschwelle ist, das Steuermodul (104) dazu konfiguriert ist, zu steuern, dass der Eingangsfeldeffektortransistor abgeschaltet wird oder die Schalterfeldeffekttransistorgruppe abgeschaltet wird, um zu steuern, dass der Pfad zwischen dem Eingang und dem Ausgang der Ladeschaltung (101) unterbrochen wird.

6. Anti-Rückstau-Ladeschaltung (100) gemäß Anspruch 5, wobei, wenn erkannt wird, dass der Eingangsstrom kleiner als die erste Stromschwelle und der Batterieausgangsstrom größer als die zweite Stromschwelle ist, der Eingangsfeldeffekttransistor gesteuert wird, um abgeschaltet zu werden; und nachdem gesteuert wurde, dass der Pfad zwischen dem Eingang und dem Ausgang der Ladeschaltung (101) unterbrochen wird, das Steuermodul (104) ferner für Folgendes konfiguriert ist: Steuern, wenn erkannt wird, dass eine Eingangsspannung kleiner als eine Spannungsschwelle ist, dass die Schalterfeldeffekttransistorgruppe abgeschaltet wird, um die Ladeschaltung (101) zu steuern, um einen Ladezustand zu verlassen; oder Steuern, wenn erkannt wird, dass die Eingangsspannung nicht kleiner als die Spannungsschwelle ist, dass der Eingangsfeldeffekttransistor leitend ist, um die Ladeschaltung (101) zu steuern, um in einen Ladezustand einzutreten.

7. Anti-Rückstau-Ladeschaltung (100) gemäß Anspruch 5, wobei die Ladeschaltung (101) eine Ladeschaltung des Schalttyps, eine Ladungspumpenladeschaltung und eine dreistufige Abwärtswandlerladeschaltung ist.

8. Anti-Rückstau-Ladeschaltung (100) gemäß Anspruch 7, wobei die Ladeschaltung (101) die Ladeschaltung des Schaltertyps ist und die Schalterfeldeffekttransistorgruppe einen ersten Feldeffekttransistor und einen zweiten Feldeffekttransistor beinhaltet, die mit dem Steuermodul (104) verbunden sind; wobei
ein Gate des ersten Feldeffekttransistors und ein Gate des zweiten Feldeffekttransistors beide mit dem Steuermodul (104) verbunden sind, eine Source des ersten Feldeffekttransistors mit einem Drain des zweiten Feldeffekttransistors verbunden ist, ein Drain des ersten Feldeffekttransistors mit einer Source des Eingangsfeldeffekttransistors verbunden ist und eine Source des zweiten Feldeffekttransistors geerdet ist.

9. Anti-Rückstau-Ladeschaltung (100) gemäß Anspruch 7, wobei die Ladeschaltung (101) die Ladungspumpenladeschaltung oder die dreistufige Abwärtswandlerladeschaltung ist und die Schalterfeldeffekttransistorgruppe Folgendes beinhaltet: einen dritten Feldeffekttransistor, einen vierten Feldeffekttransistor, einen fünften Feldeffekttransistor und einen sechsten Feldeffekttransistor, die mit dem Steuermodul (104) verbunden sind; wobei
ein Gate des dritten Feldeffekttransistors, ein Gate des vierten Feldeffekttransistors, ein Gate des fünften Feldeffekttransistors und ein Gate des sechsten Feldeffekttransistors alle mit dem Steuermodul (104) verbunden sind, eine Source des dritten Feldeffekttransistors mit einem Drain des vierten Feldeffekttransistors verbunden ist, eine Source des vierten Feldeffekttransistors mit einem Drain des fünften Feldeffekttransistors verbunden ist, eine Source des fünften Feldeffekttransistors mit einem Drain des sechsten Feldeffekttransistors verbunden ist, ein Drain des dritten Feldeffekttransistors mit einer Source des Eingangsfeldeffekttransistors verbunden ist und eine Source des sechsten Feldeffekttransistors geerdet ist.

10. Eine elektronische Vorrichtung, die die Anti-Rückstau-Ladeschaltung (100) gemäß einem der Ansprüche 1 bis 9 beinhaltet.

## Revendications

1. Un circuit de recharge antiretour (100), comprenant un circuit de recharge (101), un circuit de détection de courant d'entrée (102), un circuit de détection de courant de sortie (103), et un module de commande (104), dans lequel
une entrée du circuit de recharge (101) est connectée à un adaptateur d'alimentation (105), et une sortie du circuit de recharge (101) est connectée à une batterie (106) ;
le circuit de détection de courant d'entrée (102) est connecté entre l'adaptateur d'alimentation (105) et le circuit de recharge (101), pour détecter un courant d'entrée ; le circuit de détection de courant de sortie (103) est connecté entre le circuit de recharge (101) et la batterie (106), pour détecter un courant de sortie de batterie ; et
le module de commande (104) est connecté séparément au circuit de recharge (101), au circuit de détection de courant d'entrée (102), et au circuit de détection de courant de sortie (103), et
**caractérisé en ce que**
le module de commande (104) est configuré pour commander, s'il est détecté que le courant d'entrée est inférieur à un premier seuil de courant et que le courant de sortie de batterie est supérieur à un deuxième seuil de courant, la déconnexion d'un chemin entre l'entrée et la sortie du circuit de recharge (101).

2. Le circuit de recharge antiretour (100) selon la revendication 1, le circuit de recharge antiretour (100) comprenant en outre un circuit de détection de tension d'entrée (107) connecté entre l'adaptateur d'alimentation (105) et le circuit de recharge (101), et le circuit de détection de tension d'entrée (107) étant configuré pour détecter une tension d'entrée ; et
dans lequel le module de commande (104) est connecté au circuit de détection de tension d'entrée (107), et, après que la déconnexion du chemin entre l'entrée et la sortie du circuit de recharge (101) a été commandée, est configuré en outre pour délivrer, s'il est détecté que la tension d'entrée est inférieure à un seuil de tension, un signal d'alarme indiquant que le circuit de recharge (101) a été déconnecté.

3. Le circuit de recharge antiretour (100) selon la revendication 2, dans lequel le module de commande (104) est configuré en outre pour recevoir un signal de commande de reprise de recharge sur la base d'une réaction au signal d'alarme indiquant que le circuit de recharge (101) a été déconnecté après que le signal d'alarme a été délivré, et commander le passage à un état de recharge du circuit de recharge (101).

4. Le circuit de recharge antiretour (100) selon la revendication 2, dans lequel, après que la déconnexion du chemin entre l'entrée et la sortie du circuit de recharge (101) a été commandée, le module de commande (104) est configuré en outre pour commander, s'il est détecté que la tension d'entrée n'est pas inférieure au seuil de tension, le passage à un état de recharge du circuit de recharge (101).

5. Le circuit de recharge antiretour (100) selon la revendication 1, dans lequel le circuit de recharge (101) comprend un transistor à effet de champ d'entrée et un groupe de transistors à effet de champ à commutation ; et
le module de commande (104) est configuré pour commander, s'il est détecté que le courant d'entrée est inférieur au premier seuil de courant et que le courant de sortie de batterie est supérieur au deuxième seuil de courant, le blocage du transistor à effet de champ d'entrée ou le blocage du groupe de transistors à effet de champ à commutation, afin de commander la déconnexion du chemin entre l'entrée et la sortie du circuit de recharge (101).

6. Le circuit de recharge antiretour (100) selon la revendication 5, dans lequel s'il est détecté que le courant d'entrée est inférieur au premier seuil de courant et que le courant de sortie de batterie est supérieur au deuxième seuil de courant, le blocage du transistor à effet de champ d'entrée est commandé ; et
après que la déconnexion du chemin entre l'entrée et la sortie du circuit de recharge (101) a été commandée, le module de commande (104) est configuré en outre pour :
commander, s'il est détecté qu'une tension d'entrée est inférieure à un seuil de tension, le blocage du groupe de transistors à effet de champ à commutation, afin de commander la cessation d'un état de recharge du circuit de recharge (101) ; ou
commander, s'il est détecté que la tension d'entrée n'est pas inférieure au seuil de tension, la mise en conduction du transistor à effet de champ d'entrée, afin de commander le passage à un état de recharge du circuit de recharge (101).

7. Le circuit de recharge antiretour (100) selon la revendication 5, dans lequel le circuit de recharge (101) est un circuit quelconque parmi un circuit de recharge du type à commutation, un circuit de recharge à pompe à charge, et un circuit de recharge à convertisseur dévolteur à trois étages.

8. Le circuit de recharge antiretour (100) selon la revendication 7, dans lequel le circuit de recharge (101) est le circuit de recharge du type à commutation, et le groupe de transistors à effet de champ à commutation comprend un premier transistor à effet de champ et un deuxième transistor à effet de champ qui sont connectés au module de commande (104) ; dans lequel
une grille du premier transistor à effet de champ et une grille du deuxième transistor à effet de champ sont toutes les deux connectés au module de commande (104), une source du premier transistor à effet de champ est connectée à un drain du deuxième transistor à effet de champ, un drain du premier transistor à effet de champ est connecté à une source du transistor à effet de champ d'entrée, et une source du deuxième transistor à effet de champ est mise à la masse.

9. Le circuit de recharge antiretour (100) selon la revendication 7, dans lequel le circuit de recharge (101) est le circuit de recharge à pompe à charge ou le circuit de recharge à convertisseur dévolteur à trois étages, et le groupe de transistors à effet de champ à commutation comprend : un troisième transistor à effet de champ, un quatrième transistor à effet de champ, un cinquième transistor à effet de champ, et un sixième transistor à effet de champ qui sont connectés au module de commande (104) ; dans lequel :
une grille du troisième transistor à effet de champ, une grille du quatrième transistor à effet de champ, une grille du cinquième transistor à effet de champ, et une grille du sixième transistor à effet de champ sont toutes connectées au module de commande (104), une source du troisième transistor à effet de champ est connectée à un drain du quatrième transistor à effet de champ, une source du quatrième transistor à effet de champ est connectée à un drain du cinquième transistor à effet de champ, une source du cinquième transistor à effet de champ est connectée à un drain du sixième transistor à effet de champ, un drain du troisième transistor à effet de champ est connecté à une source du transistor à effet de champ d'entrée, et une source du sixième transistor à effet de champ est mise à la masse.

10. Un dispositif électronique, comprenant le circuit de recharge antiretour (100) selon l'une quelconque des revendications 1 à 9.
